# FASCICULE DE BREVET EUROPEEN

(11) **EP 4 085 189 B1**
(45) Date de publication et mention de la délivrance du brevet: **29.01.2025**
(21) Numéro de dépôt: 20851212.9
(22) Date de dépôt: 18.12.2020
(51) Int. Cl.: F02K 1/60

(54) **INVERSEUR DE POUSSÉE À PORTES COMPRENANT AU MOINS UN DÉFLECTEUR ESCAMOTABLE POUR OBTURER UNE OUVERTURE LATÉRALE**
SCHUBUMKEHRVORRICHTUNG MIT TÜREN UND MINDESTENS EINEM ZURÜCKZIEHBAREN DEFLEKTOR ZUM VERSCHLIESSEN EINER SEITLICHEN ÖFFNUNG
THRUST REVERSER COMPRISING DOORS AND AT LEAST ONE RETRACTABLE DEFLECTOR FOR CLOSING A LATERAL OPENING

(30) Priorité: 02.01.2020 FR 2000013
(43) Date de publication de la demande: 09.11.2022
(73) Titulaire: Safran Nacelles, 76700 Gonfreville-l'Orcher (FR)
(72) Inventeur: PASCAL, Sébastien Laurent Marie, 77550 MOISSY-CRAMAYEL (FR); GONIDEC, Patrick, 77550 MOISSY-CRAMAYEL (FR); PHI, Alexandre, 77550 MOISSY-CRAMAYEL (FR); FERREY, Paul, 77550 MOISSY-CRAMAYEL (FR)
(74) Mandataire: Brevalex
(86) Numéro de dépôt international: PCT/FR2020/052554
(87) Numéro de publication internationale: WO 2021/136902

(56) Documents cités:
- FR-A1- 2 764 340
- US-A- 2 620 622
- US-A- 2 933 890
- US-A1- 2016 146 113

## Description

### Domaine technique

L'invention se rapporte au domaine des inverseurs de poussée pour nacelle d'ensemble propulsif d'aéronef, et plus spécifiquement au domaine des inverseurs à portes.

De manière non limitative, l'invention présente un intérêt particulier lorsqu'un tel inverseur équipe un ensemble propulsif monté au voisinage d'un empennage, c'est-à-dire généralement en partie arrière du fuselage d'un aéronef.

### État de la technique antérieure

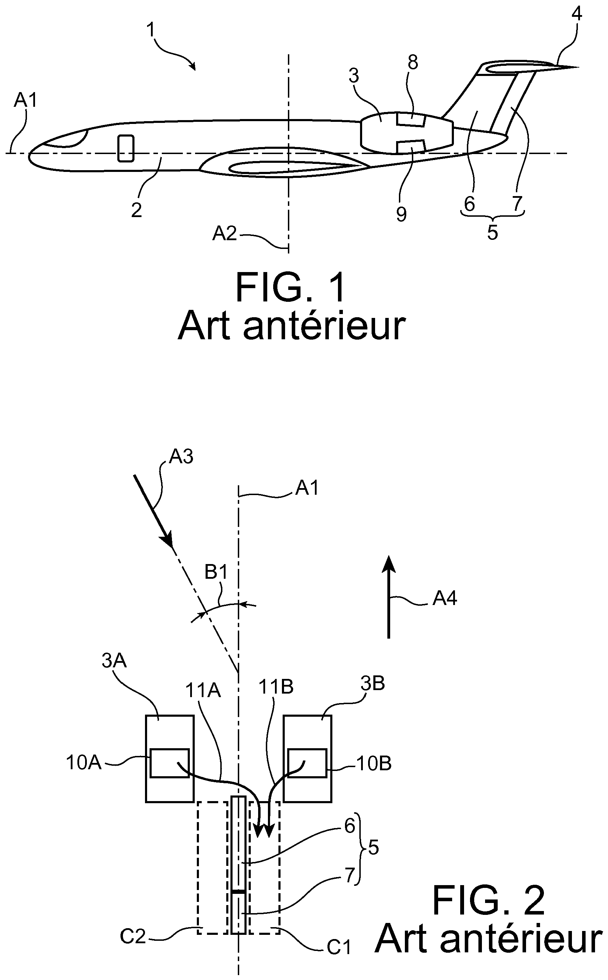

Il est représenté à la figure 1 un avion 1 d'affaires conventionnel s'étendant le long d'un axe longitudinal A1. Cet avion 1 comprend un fuselage 2, deux ensembles propulsifs 3 montés en partie arrière du fuselage 2 (un seul ensemble propulsif étant visible à la figure 1), un empennage horizontal 4 et un empennage vertical 5. L'empennage vertical 5 comprend une partie fixe 6, aussi appelée dérive, et une partie mobile 7, aussi appelée gouverne de direction ou de symétrie. La dérive 6 est destinée à stabiliser l'avion 1 autour d'un axe de lacet A2, notamment afin de maintenir l'axe longitudinal A1 parallèle à l'axe de la piste en phase d'atterrissage en cas de vent de travers (voir ci-après). La gouverne de symétrie 7 est destinée à contrôler le moment de l'avion 1 autour de l'axe de lacet A2, notamment pour pouvoir maintenir l'axe longitudinal A1 parallèle à l'axe de la piste en phase d'atterrissage.

Chacun des ensembles propulsifs 3 comprend un inverseur de poussée ayant une porte supérieure 8 et une porte inférieure 9. A la figure 1, les ensembles propulsifs 3 sont dans une configuration de poussée directe dans laquelle les portes 8 et 9 sont fermées de manière à obturer des ouvertures d'inversion respectives (non représentées sur cette figure).

La figure 2 représente schématiquement les deux ensembles propulsifs (respectivement référencés 3A et 3B) ainsi que l'empennage vertical 5 par rapport audit axe longitudinal A1 et à un vent relatif A3. Le vent relatif A3 est le vent généré par la somme du déplacement de l'avion 1 et du vent. A la figure 2, les ensembles propulsifs 3A et 3B sont dans une configuration d'inversion de poussée dans laquelle lesdites portes (non représentées sur cette figure) sont ouvertes de manière à libérer les ouvertures d'inversion correspondantes, à savoir une ouverture d'inversion supérieure 10A associée à la porte supérieure de l'inverseur de l'ensemble propulsif 3A et une ouverture d'inversion supérieure 10B associée à la porte supérieure de l'inverseur de l'ensemble propulsif 3B.

De manière connue en soi, les portes des ensembles propulsifs 3A et 3B en configuration d'inversion de poussée sont configurées pour rediriger dans un sens amont A4 une partie de l'air sortant des ensembles propulsifs 3A et 3B par les ouvertures d'inversion 10A/10B.

La figure 2 illustre une situation d'atterrissage par vent de travers, entraînant un déplacement de l'avion 1 autour de l'axe de lacet A2 de sorte que son axe longitudinal A1 forme un angle B1 avec la direction du vent relatif A3.

Dans ces conditions, l'empennage vertical 5 est susceptible d'être soumis à des courants d'air asymétriques, compte tenu notamment des trajectoires respectives des écoulements d'air sortant des ensembles propulsifs 3A et 3B par les ouvertures d'inversion supérieures 10A et 10B.

En effet, une partie de l'air sortant de l'ensemble propulsif 3B, par l'ouverture d'inversion supérieure 10B, s'écoule typiquement selon une trajectoire 11B passant par une région C1 s'étendant le long de l'une des faces de l'empennage vertical 5 située du côté de cet ensemble propulsif 3B. Une partie de l'air sortant de l'ensemble propulsif 3A, par l'ouverture d'inversion supérieure 10A, s'écoule typiquement selon une trajectoire 11A contournant la dérive 6 et traversant également la région C1. Du côté de l'ensemble propulsif 3A, une région C2 s'étendant le long de l'autre face de l'empennage vertical 5 se retrouve ainsi sous-alimentée en air.

La sous-alimentation en air de la dérive 6 au niveau de la région C2 entraîne une perte de stabilité de l'avion 1.

De plus, la gouverne 7 ainsi déventée au niveau de la région C2 présente une efficacité réduite susceptible d'entraîner une perte de contrôlabilité de l'avion 1 et potentiellement une sortie de piste. Le document FR 2 764 340A1 divulgue un autre système d'inversion de poussée selon l'état de la technique.

### Exposé de l'invention

Un but de l'invention est de fournir un inverseur à portes capable d'améliorer la stabilité et la contrôlabilité d'un aéronef lorsque les portes sont ouvertes en phase d'atterrissage, en particulier par vent de travers.

Un autre but de l'invention est de fournir un inverseur à portes permettant d'améliorer les performances d'inversion de poussée.

Plus généralement, l'invention vise à procurer un inverseur à portes permettant de mieux maîtriser les écoulements d'air résultant de l'ouverture des portes.

A cet effet, l'invention a pour objet un inverseur de poussée pour ensemble propulsif d'aéronef, cet inverseur comprenant une structure fixe et au moins une porte mobile entre :
- une position fermée dans laquelle elle délimite avec la structure fixe un conduit d'écoulement, le conduit d'écoulement comprenant une sortie d'éjection délimitée au moins en partie par une extrémité arrière de la structure fixe, la porte en position fermée étant configurée pour pouvoir guider un fluide en écoulement dans le conduit vers sa sortie d'éjection afin de générer une poussée, et
- une position ouverte dans laquelle la porte dégage une ouverture d'inversion de manière à pouvoir évacuer du conduit d'écoulement une partie dudit fluide, via cette ouverture d'inversion, et rediriger au moins une partie du fluide ainsi évacué vers une extrémité avant de la structure fixe afin de générer une contre-poussée.

Selon l'invention, cet inverseur comprend au moins un déflecteur relié à la fois à la porte et à la structure fixe de manière à se plier lorsque la porte est fermée et à se déplier lorsque la porte est ouverte, le déflecteur déplié obstruant une ouverture latérale définie entre la structure fixe et une extrémité latérale de la porte ouverte.

L'obstruction de l'ouverture latérale permet d'entraver un écoulement latéral du fluide sortant du conduit par l'ouverture d'inversion. Sans obstruction de cette ouverture latérale, une partie du fluide sortant du conduit tend à traverser cette ouverture latérale et à poursuivre sa trajectoire avec une composante latérale en perturbant l'alimentation de l'empennage.

Lorsque l'inverseur de l'invention équipe un ensemble propulsif monté sur un fuselage d'aéronef, un tel déflecteur permet d'éviter qu'une partie du fluide sortant de l'inverseur entraîne une alimentation asymétrique de l'empennage vertical de cet aéronef. L'invention permet par conséquent d'améliorer la stabilité et la contrôlabilité de l'aéronef.

De plus, l'inverseur de l'invention permet d'améliorer les performances d'inversion de poussée puisqu'au moins une partie du fluide bloqué par le déflecteur peut ainsi contribuer à la contre-poussée de freinage.

En outre, la nature pliable/dépliable du déflecteur permet son escamotage lorsque la porte est fermée, de manière à limiter ou empêchertoute interaction du déflecteur avec le fluide en écoulement dans le conduit et/ou avec le fluide en écoulement à l'extérieur de l'inverseur. L'inverseur de l'invention permet ainsi de conserver de bonnes performances en poussée directe.

Selon une première variante de réalisation, le déflecteur peut comprendre des lames mobiles d'obstruction et une ou plusieurs bielles, chaque bielle étant articulée à l'une de ses extrémités sur une première lame mobile adjacente parmi lesdites lames mobiles et à l'autre de ses extrémités sur une deuxième lame mobile adjacente parmi lesdites lames mobiles.

Selon cette première variante, le déflecteur peut fonctionner selon le principe d'un éventail.

De préférence, les lames mobiles peuvent être réalisées dans un matériau rigide, par exemple un matériau métallique ou un matériau composite.

Selon une deuxième variante de réalisation, le déflecteur peut comprendre au moins une paroi en matériau souple permettant son pliage lorsque la porte est fermée et son dépliage lorsque la porte est ouverte.

Dans le cadre de cette invention, le matériau de la paroi formant le déflecteur est souple en ce qu'il permet de plier la paroi sur elle-même lors de la fermeture de la porte, et de la déplier lors de l'ouverture de la porte.

De préférence, le matériau souple peut être un textile tel qu'un tissu, par exemple un tissu comprenant des fibres organiques du type chlorofibres, fluorofibres, fibres acryliques, fibres phénoliques, fibres d'aramide, d'alcool polyvinylique, de polyéthylène, de polypropylène, de polysulfure de phénylène, de viscose, de polyamide, de polyester, de polyétheréthercétone (PEEK), de polyétherimide, de polyazole, etc., ou bien des fibres inorganiques du type fibres céramiques comme des fibres de carbure de silicium, de carbure de bore, des fibres céramiques à base d'alumine, etc., ou bien une combinaison de telles fibres.

Un tel matériau permet d'obtenir la tenue structurale requise et la tenue à des paramètres environnementaux du déflecteur tels que la température et/ou le type de fluides auxquels le déflecteur est exposé.

De plus, un tel matériau permet de limiter l'accroissement de masse lié à l'ajout d'un tel déflecteur.

Le déflecteur peut être une combinaison de la première et de la deuxième variante décrites ci-dessus. Par exemple, les lames mobiles du déflecteur de la première variante peuvent comprendre une paroi en matériau souple conforme à la deuxième variante.

Dans un mode de réalisation, la structure fixe peut comprendre des poutres délimitant radialement l'ouverture d'inversion, le déflecteur pouvant être relié à l'une de ces poutres.

De préférence, le déflecteur déplié peut présenter une dimension d'envergure tangentielle supérieure ou égale à 20%, plus préférentiellement supérieure ou égale à 25%, d'une distance radiale entre une extrémité distale de la porte ouverte et la structure fixe.

De préférence, le déflecteur déplié peut présenter une dimension d'envergure axiale supérieure ou égale à 25%, plus préférentiellement supérieure ou égale à 30%, d'une distance axiale entre une extrémité avant de l'ouverture d'inversion et ladite extrémité distale de la porte ouverte.

Dans un mode de réalisation, le déflecteur peut être configuré de manière à occuper, lorsque la porte est fermée, un logement délimité circonférentiellement entre la porte et la structure fixe et ayant une dimension radiale inférieure ou égale à une épaisseur de la porte.

Ainsi logé, le déflecteur plié n'entrave aucunement les écoulements de fluide dans le conduit et à l'extérieur de l'inverseur.

Par exemple, lorsque la porte est fermée, ce logement peut être délimité radialement à l'intérieur par une surface ou paroi interne de la porte et/ou de la structure fixe et radialement à l'extérieur par une surface ou paroi externe de la porte et/ou de la structure fixe.

De telles surfaces ou parois interne et externe permettant de refermer le logement de manière étanche lorsque la porte est fermée.

Dans un mode de réalisation, l'au moins un déflecteur peut être situé d'un unique côté d'un premier plan longitudinal médian de l'inverseur.

Autrement dit, chaque déflecteur qui est relié à la porte ou la structure fixe et qui est configuré pour obstruer une ouverture latérale de l'inverseur est dans ce cas situé d'un même côté du premier plan longitudinal médian de l'inverseur.

Ainsi, lorsque l'inverseur comprend plusieurs déflecteurs, ceux-ci sont tous situés du même côté du premier plan longitudinal médian.

Plus généralement, l'inverseur peut par conséquent être dépourvu d'un tel déflecteur de l'autre côté du premier plan longitudinal médian.

L'invention a aussi pour objet une nacelle pour ensemble propulsif d'aéronef, cette nacelle comprenant un inverseur tel que décrit ci-dessus.

L'invention a aussi pour objet un ensemble propulsif pour aéronef, cet ensemble propulsif comprenant une nacelle telle que décrite ci-dessus.

Enfin, l'invention a aussi pour objet un aéronef comprenant un tel ensemble propulsif.

Dans un mode de réalisation, l'aéronef peut comprendre un fuselage sur lequel est monté l'ensemble propulsif, le fuselage de l'aéronef et l'au moins un déflecteur de l'inverseur étant situés du même côté dudit premier plan longitudinal médian de l'inverseur.

De préférence, l'aéronef peut comprendre un empennage, cet empennage et ladite porte de l'inverseur pouvant être situés d'un même côté d'un deuxième plan longitudinal médian de l'inverseur, ce deuxième plan longitudinal médian étant perpendiculaire audit premier plan longitudinal médian.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique, déjà décrite ci-dessus, d'un aéronef de l'art antérieur, cet aéronef comprenant des ensembles propulsifs équipés chacun d'un inverseur de poussée à portes ;
[Fig. 2] est une vue schématique, déjà décrite ci-dessus, de parties de l'aéronef de la figure 1 en phase d'atterrissage par vent de travers, les inverseurs étant dans une configuration d'inversion de poussée ;
[Fig. 3] est une vue schématique en coupe axiale d'un ensemble propulsif d'aéronef ;
[Fig. 4] est une vue schématique en perspective d'un inverseur de poussée de l'art antérieur, cet inverseur comprenant des portes en position ouverte correspondant à une configuration d'inversion de poussée ;
[Fig. 5] est une vue schématique en coupe axiale de l'inverseur de la figure 4, en configuration d'inversion de poussée ;
[Fig. 6] est une vue schématique en coupe axiale de l'inverseur de la figure 4, en configuration de poussée directe, les portes étant en position fermée ;
[Fig. 7] est une vue schématique en perspective d'un inverseur de poussée à portes conforme à l'invention, en configuration d'inversion de poussée, cet inverseur comprenant un premier type de déflecteurs souples pour obturer des ouvertures latérales ;
[Fig. 8] est une vue schématique de l'inverseur de la figure 7, en configuration de poussée directe, les déflecteurs étant pliés au sein de logements délimités chacun par l'une des portes et par une poutre de l'inverseur ;
[Fig. 9] est une vue schématique d'un inverseur de poussée à portes conforme à l'invention, en configuration d'inversion de poussée, cet inverseur comprenant un deuxième type de déflecteurs souples pour obturer lesdites ouvertures latérales ;
[Fig. 10] est une vue schématique partielle d'un inverseur de poussée à portes conforme à l'invention, en configuration d'inversion de poussée, cet inverseur comprenant un déflecteur doté d'un mécanisme de pliage/dépliage à articulations ;
[Fig. 11] est une vue schématique en section transversale de l'inverseur de la figure 10, en configuration d'inversion de poussée ;
[Fig. 12] est une vue schématique en section transversale de l'inverseur de la figure 10, dans une configuration intermédiaire ;
[Fig. 13] est une vue schématique en section transversale de l'inverseur de la figure 10, en configuration de poussée directe ;
[Fig. 14] est une vue schématique partielle d'un inverseur de poussée à portes conforme à l'invention, en configuration d'inversion de poussée, cette figure illustrant des dimensions relatives d'un déflecteur d'obturation d'ouverture latérale.

### Description détaillée de modes de réalisation

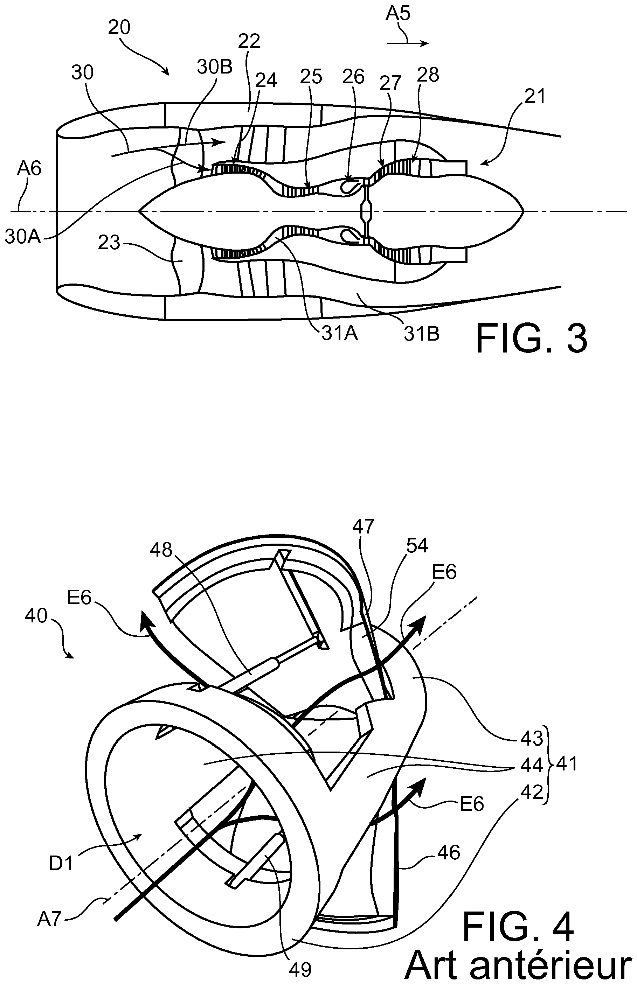

Il est représenté à la figure 3 un ensemble propulsif 20 destiné à être monté sur un aéronef tel l'avion 1 de la figure 1.

Dans la présente description, les termes « amont », « aval », « avant » et « arrière » sont définis par rapport à un sens A5 d'écoulement d'air autour de l'ensemble propulsif 20 lorsque celui-ci génère une poussée, c'est-à-dire un sens A5 opposé au sens du déplacement de l'aéronef qu'il propulse.

De manière connue en soi, l'ensemble propulsif 20 comprend une turbomachine 21 carénée par une nacelle 22. Dans cet exemple, la turbomachine 21 est un turboréacteur à double corps et à double flux.

Le turboréacteur 21 présente un axe central longitudinal A6 autour duquel s'étendent ses différents composants, en l'occurrence, de l'avant vers l'arrière du turboréacteur 21, une soufflante 23, un compresseur basse pression 24, un compresseur haute pression 25, une chambre de combustion 26, une turbine haute pression 27 et une turbine basse pression 28. Les compresseurs 24 et 25, la chambre de combustion 26 et les turbines 27 et 28 forment un générateur de gaz.

Lors du fonctionnement du turboréacteur 21, un écoulement d'air 30 pénètre dans la nacelle 22 par une entrée d'air en amont de l'ensemble propulsif 20, traverse la soufflante 23 puis se divise en un flux primaire 30A central et un flux secondaire 30B. Le flux primaire 30A s'écoule dans une veine primaire 31A de circulation des gaz traversant le générateur de gaz. Le flux secondaire 30B s'écoule dans une veine secondaire 31B entourant le générateur de gaz et délimitée radialement vers l'extérieur par la nacelle 22.

L'invention se rapporte plus spécifiquement à un inverseur de poussée 40 du type illustré à la figure 4. Sur cette figure, l'inverseur 40 est un inverseur de l'art antérieur au sens où il ne comprend aucun déflecteur d'obstruction d'ouverture latérale (voir plus loin ci-dessous). La figure 4 permet ainsi d'illustrer plus précisément la structure de cet inverseur 40 et certaines trajectoires du fluide sortant de cet inverseur 40 lorsque celui-ci est dans une configuration d'inversion de poussée (voir plus loin ci-dessous).

De manière générale, l'inverseur 40 a pour fonction d'inverser une partie de la poussée générée par l'ensemble propulsif 20 afin de freiner l'aéronef lors de son atterrissage.

Bien entendu, l'inverseur 40 peut équiper un ensemble propulsif différent de celui de la figure 3 sans sortie du cadre de l'invention.

En référence à la figure 4, l'inverseur 40 comprend d'une part une structure fixe 41 s'étendant le long d'un axe central longitudinal A7.

La structure fixe 41 comprend dans cet exemple un cadre avant 42, une section arrière 43 et deux poutres 44 reliant le cadre avant 42 et la section arrière 43 l'un à l'autre.

Le cadre avant 42 a une forme annulaire configurée pour relier l'inverseur 40 à la nacelle 22, selon toute technique d'assemblage conventionnelle.

Dans cet exemple, la section arrière 43 a une forme annulaire définissant une virole d'éjection. Cette virole d'éjection 43 définit une extrémité arrière à la fois de l'inverseur 40, de la nacelle 22 et de l'ensemble propulsif 20.

Lorsque l'inverseur 40 est monté sur l'ensemble propulsif 20, l'axe central longitudinal A7 de l'inverseur 40 et l'axe central longitudinal A6 de l'ensemble propulsif 20 coïncident.

Le cadre avant 42, la section arrière 43 et les poutres 44 délimitent, radialement vers l'extérieur, un conduit d'écoulement D1 pour un fluide provenant d'une partie de l'ensemble propulsif 20 située en amont de l'inverseur 40.

Plus précisément, le fluide susceptible de s'écouler dans le conduit D1 est dans cet exemple constitué d'un mélange de gaz sortant de la veine primaire 31A et d'air en provenance de la veine secondaire 31B, c'est-à-dire d'un mélange des flux primaire 30A et secondaire 30B.

Le conduit d'écoulement D1 comprend une entrée délimitée par le cadre avant 42 et une sortie d'éjection délimitée par la section arrière 43.

Afin de pouvoir réaliser l'inversion de poussée, la structure fixe 41 comprend dans cet exemple deux ouvertures d'inversion sous forme d'ouvertures radiales.

Chacune de ces ouvertures d'inversion est délimitée, longitudinalement, par le cadre avant 42 et la section arrière 43 et, radialement, par les poutres 44.

L'inverseur 40 de la figure 4 comprend d'autre part une structure mobile sous forme de deux portes 46 et 47 pivotantes.

Les portes 46 et 47 sont respectivement dénommées porte inférieure et porte supérieure, en référence à leur positionnement relatif par rapport à la verticale lorsque l'inverseur 40 est relié à un aéronef en configuration de vol.

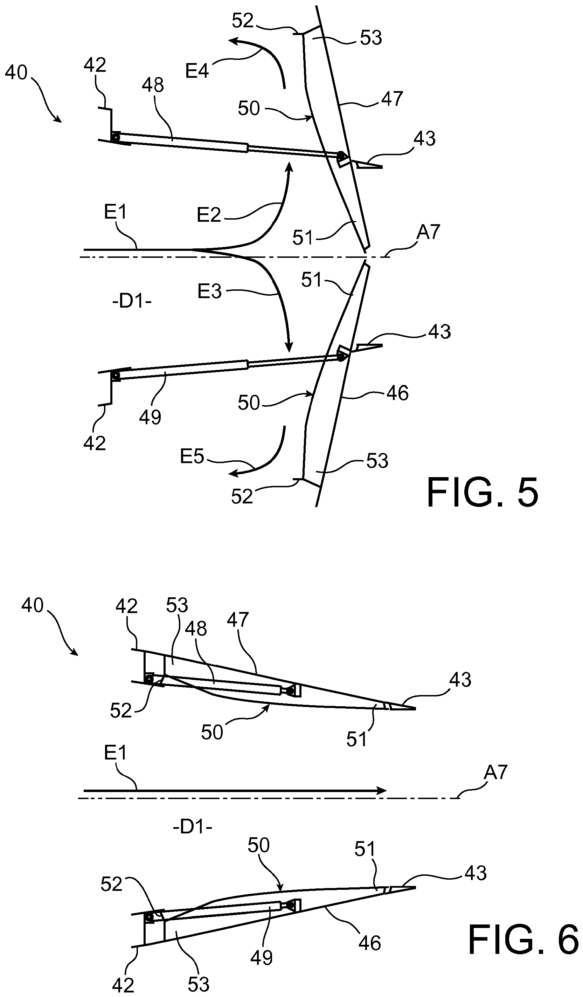

Chacune des portes 46 et 47 est mobile par rapport à la structure fixe 41, autour d'un axe de rotation respectif (non représenté), entre une position ouverte, illustrée aux figures 4 et 5, et une position fermée illustrée à la figure 6.

Pour modifier la position des portes 46 et 47, l'inverseur 40 comprend deux vérins 48 et 49 qui sont chacun reliés d'une part au cadre avant 42 de la structure fixe 41 et d'autre part à l'une respective des portes 46 et 47.

En référence à la figure 6, dans laquelle les portes 46 et 47 sont en position fermée, chacune des portes 46 et 47 obture l'une respective des ouvertures d'inversion de manière à délimiter, en continuité avec la structure fixe 41, le conduit d'écoulement D1.

En position fermée, les portes 46 et 47 permettent de guider vers la sortie d'éjection un fluide E1 pénétrant dans le conduit D1 au niveau du cadre avant 42 et s'écoulant dans le conduit D1 dans une direction globalement parallèle à l'axe central longitudinal A7. Comme indiqué ci-dessus, le flux de fluide E1 comprend dans cet exemple un mélange des flux primaire 30A et secondaire 30B générés par le fonctionnement du turboréacteur 21.

Dans cette configuration de l'inverseur 40 dans laquelle les portes 46 et 47 sont en position fermée, l'ensemble propulsif 20 peut générer une poussée directe. Cette configuration de l'inverseur 40 est dite de poussée directe, ou encore « jet direct ».

En référence à la figure 5, dans laquelle les portes 46 et 47 sont en position ouverte, les portes 46 et 47 dégagent les ouvertures d'inversion de la structure fixe 41.

Cette position ouverte permet d'évacuer du conduit d'écoulement D1, via les ouvertures d'inversion, des parties E2 et E3 du fluide E1 s'écoulant dans le conduit D1. Elle permet en outre de rediriger au moins une partie E4 et E5 du fluide ainsi évacué vers l'amont, c'est-à-dire en particulier vers le cadre avant 42 de la structure fixe 41 et plus généralement vers l'avant de l'ensemble propulsif 20 et de l'aéronef 1. Le fluide ainsi redirigé vers l'amont génère une contre-poussée.

Pour orienter le fluide vers l'amont, les portes 46 et 47 comprennent chacune une paroi interne 50 ayant une extrémité proximale 51 configurée pour s'étendre radialement au travers du conduit d'écoulement D1, de manière à empêcher tout ou l'essentiel du fluide E1 en écoulement dans le conduit D1 de poursuivre sa trajectoire jusqu'à la sortie d'éjection. L'orientation de la paroi interne 50 est telle que le fluide E1 ainsi bloqué poursuive sa trajectoire en traversant les ouvertures d'inversion et en ayant au moins une composante orientée vers l'amont.

De manière connue en soi, il est possible de maximiser cette composante et d'améliorer les performances en inversion de poussée en plaçant un becquet 52 à une extrémité distale 53 de la paroi interne 50 de chacune des portes 46 et 47.

Lorsque les portes 46 et 47 sont en position ouverte, l'inverseur 40 est dans une configuration dite d'inversion de poussée, aussi appelée « jet inversé ».

Dans la présente description, l'expression « position ouverte » désigne une position d'ouverture maximale telle que représentée aux figures 4 et 5, étant entendu que les portes 46 et 47 occupent transitoirement des positions intermédiaires lors des changements de configuration de l'inverseur 40.

En pratique, l'inverseur 40 de la figure 4 ne permet pas de rediriger vers l'amont l'intégralité du fluide E1 lorsque les portes 46 et 47 sont ouvertes.

Notamment, une fraction E6 du fluide sortant du conduit d'écoulement D1 par les ouvertures d'inversion tend à poursuivre sa trajectoire vers l'aval en traversant des ouvertures latérales respectivement définies entre des extrémités latérales 54 des portes 46 et 47 et les poutres 44 de la structure fixe 41 lorsque les portes 46 et 47 sont ouvertes (voir figure 4).

Non seulement cette fraction de fluide E6 s'oppose à la contre-poussée, mais elle est de plus susceptible de réduire la stabilité et la contrôlabilité de l'aéronef pour les raisons exposées ci-dessus en référence à la figure 2.

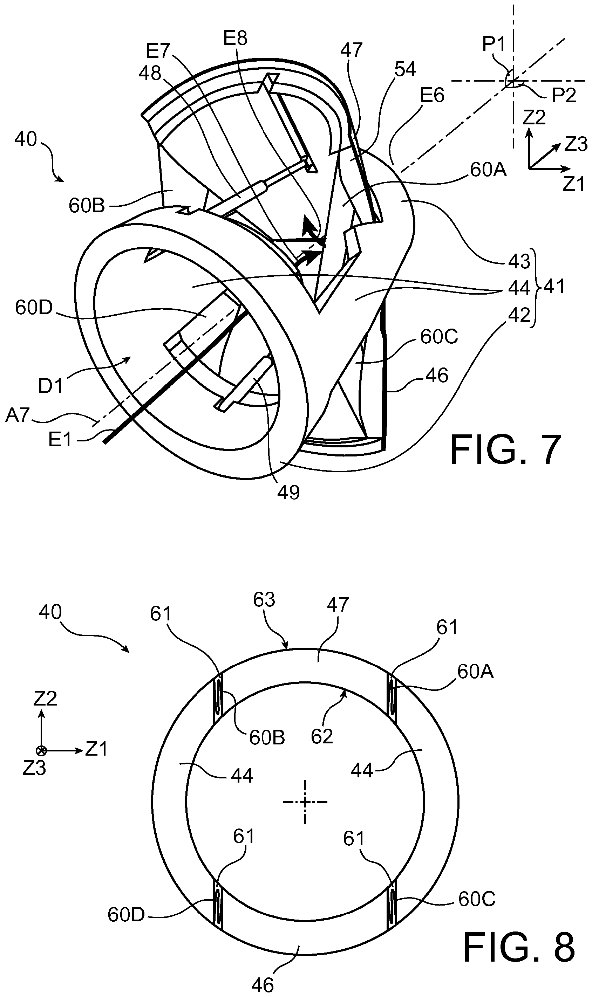

Pour surmonter l'un et/ou l'autre de ces inconvénients, il est proposé d'équiper l'inverseur 40 d'au moins un déflecteur tel que décrit ci-après en référence aux figures 7 à 14.

Chacune des figures 7 à 14 comprend un référentiel Z1, Z2 et Z3 définissant respectivement des directions latérale, verticale et longitudinale.

Il est représenté à la figure 7 un inverseur 40 qui se distingue de celui de la figure 4 en ce qu'il comprend quatre déflecteurs 60A, 60B, 60C et 60D.

En référence à cette figure 7, Il est défini par rapport au référentiel précité un premier plan longitudinal médian P1 et un deuxième plan longitudinal médian P2. Dans cet exemple, le plan longitudinal médian P1 est un plan vertical parallèle aux directions Z2 et Z3 et passant par l'axe central longitudinal A7 de l'inverseur 40 et par les vérins 48 et 49. Le plan longitudinal médian P2 est un plan horizontal parallèle aux directions Z1 et Z3 qui passe aussi par l'axe central longitudinal A7 et qui est perpendiculaire au plan vertical P1.

La figure 7 montre l'inverseur en configuration d'inversion de poussée.

Chacun des déflecteurs 60A, 60B, 60C et 60D est relié d'une part à l'une des portes 46 et 47 et, d'autre part, à l'une des poutres 44 de la structure fixe 41.

Plus précisément, le déflecteur 60A est relié à une première des poutres 44 et à l'une des extrémités latérales 54 de la porte supérieure 47. Le déflecteur 60B est relié à l'autre poutre 44, dite deuxième poutre, et à l'autre extrémité latérale de la porte supérieure 47. Le déflecteur 60C est relié à ladite première poutre 44 et à l'une des extrémités latérales de la porte inférieure 46. Le déflecteur 60D est relié à ladite deuxième poutre 44 et à l'autre extrémité latérale de la porte inférieure 46.

Dans cet exemple, chacun des déflecteurs 60A, 60B, 60C et 60D est formé d'une paroi en matériau souple lui permettant de se plier lorsque la porte 46 ou 47 à laquelle il est relié est fermée et lui permettant de se déplier lorsque cette porte 46 ou 47 est ouverte.

Dans la configuration d'inversion de poussée de la figure 7, les portes 46 et 47 sont en position ouverte et les déflecteurs 60A, 60B, 60C et 60D dépliés obstruent chacun une partie d'une ouverture latérale respective.

Ainsi, l'ouverture latérale obstruée par le déflecteur 60A est définie entre la première poutre 44 et l'extrémité latérale 54 de la porte supérieure 47 auxquelles ce déflecteur 60A est relié. Il en va de manière analogue pour les autres déflecteurs 60B, 60C et 60D.

En référence au déflecteur 60A de la figure 7, une telle obstruction permet de bloquer une fraction de fluide E7 sortant du conduit d'écoulement D1 par l'ouverture d'inversion supérieure.

Dans cet exemple, le déflecteur 60A permet en outre de rediriger vers la porte supérieure 47 au moins une partie E8 du fluide ainsi bloqué, ce qui permet d'augmenter la contre-poussée.

De manière analogue, les autres déflecteurs 60B, 60C et 60D remplissent également ces fonctions d'obturation et de redirection de fluide.

L'inverseur 40 de l'invention est représenté à la figure 8 en configuration de poussée directe.

En référence à cette figure, les déflecteurs 60A-60D sont chacun configurés de manière à se replier au sein d'un logement 61 respectif lorsque les portes 46 et 47 sont en position fermée.

Concernant les déflecteurs 60A et 60B reliés à la porte supérieure 47, le logement 61 correspondant est délimité, circonférentiellement, entre la porte supérieure 47 et l'une respective des poutres 44 et, radialement, entre une surface interne 62 et une surface externe 63 de la porte supérieure 47, c'est-à-dire dans l'épaisseur de la porte 47.

Cela s'applique par analogie aux déflecteurs 60C et 60D reliés à la porte inférieure 46.

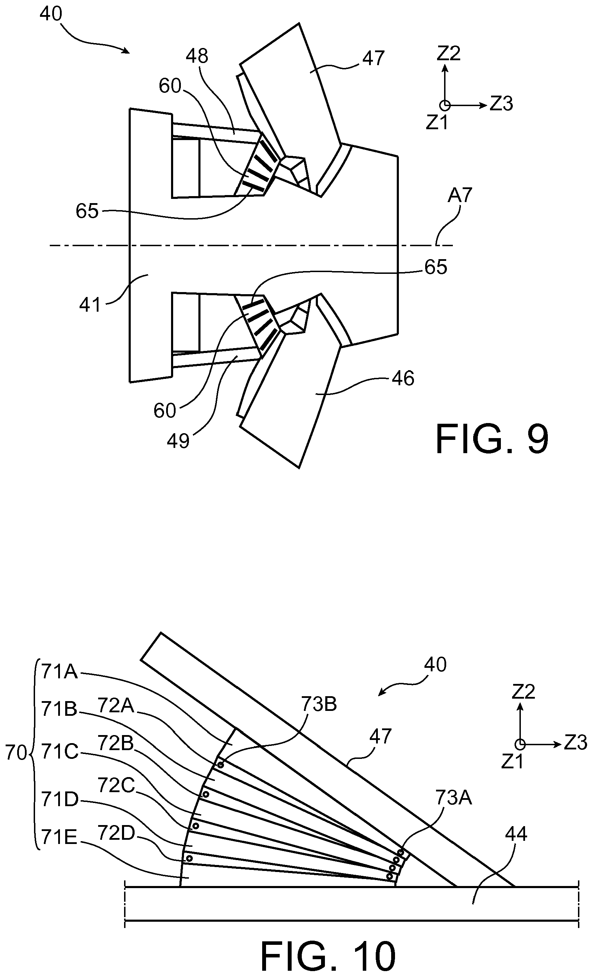

La figure 9 montre une variante de réalisation qui se distingue de celle de la figure 7 en ce que les déflecteurs 60 comprennent des tiges 65 noyées dans le tissu des parois, de manière à guider les déflecteurs 60 lors de la fermeture des portes 46 et 47 et faciliter ainsi leur pliage au sein de leur logement 61.

Dans les modes de réalisation des figures 7 à 9, chacune des ouvertures latérales est obstruée par l'un des déflecteurs 60, 60A, 60B, 60C ou 60D lorsque les portes 46 et 47 sont en position ouverte.

La figure 10 montre un autre type de déflecteur 70.

Le déflecteur 70 comprend dans cet exemple cinq lames mobiles 71A-71E et quatre bielles 72A-72D.

Chacune des bielles 72A-72D est articulée à l'une de ses extrémités sur une première lame mobile adjacente parmi lesdites lames mobiles 71A-71E et, à l'autre de ses extrémités, sur une deuxième lame mobile adjacente parmi lesdites lames mobiles 71A-71E.

Plus précisément, la bielle 72A est dans cet exemple articulée à l'une de ses extrémités, dite extrémité proximale, à la lame mobile 71A, par une première articulation 73A de type pivot. La bielle 72A est articulée à l'autre de ses extrémités, dite extrémité distale, à la lame mobile 71B, par une deuxième articulation 73B de type pivot.

Selon le même principe, la bielle 72B est articulée aux lames mobiles 71B et 71C, la bielle 72C est articulée aux lames mobiles 71C et 71D, et la bielle 72D est articulée aux lames mobiles 71D et 71E.

Dans cet exemple, la lame mobile 71A est reliée à la porte supérieure 47 tandis que la lame mobile 71E est reliée à la poutre 44.

Les lames mobiles 71A-71E sont des lames d'obstruction qui remplissent la même fonction d'obstruction que la paroi souple des déflecteurs 60 et 60A-60D des figures 7 et 9.

En particulier, le déflecteur 70 de la figure 10 est configuré de sorte que, en configuration d'inversion de poussée, les lames mobiles 71A-71E soient disposées les unes à côtés des autres de manière à obstruer ensemble l'ouverture latérale définie entre la poutre 44 correspondante et l'extrémité latérale de la porte supérieure 47.

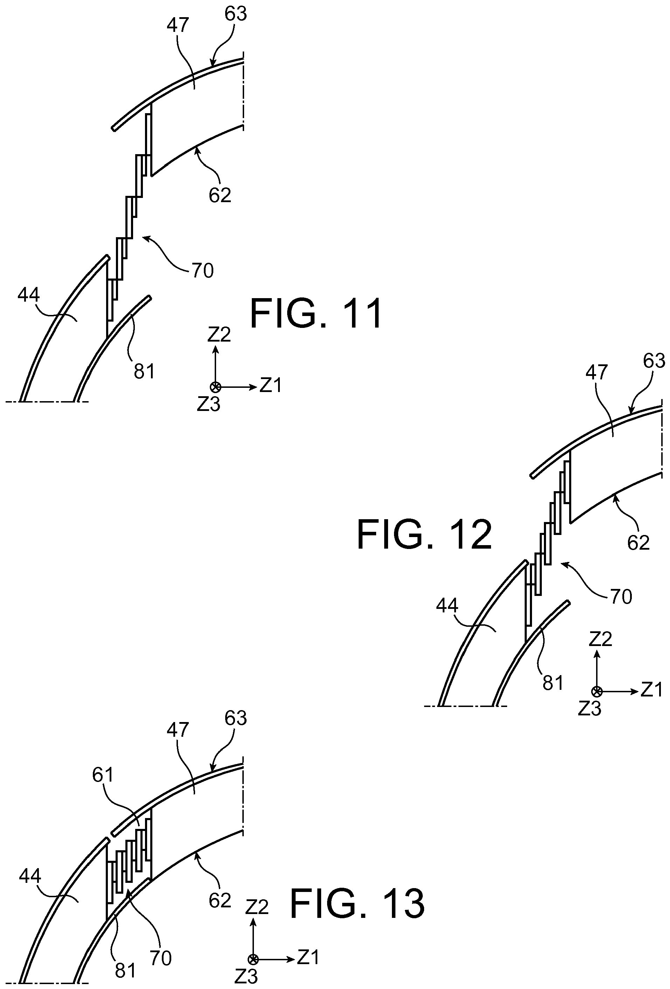

Les figures 11 à 13 montrent le déflecteur 70 de la figure 10 dans différentes configurations. A la figure 11, la porte supérieure 47 est en position ouverte. A la figure 13, la porte supérieure 47 est en position fermée. A la figure 12, la porte supérieure 47 est dans une position intermédiaire entre la position ouverte et la position fermée.

Dans un mode de réalisation non représenté, l'extrémité proximale de chacune des bielles du déflecteur 70 est articulée à une lame mobile correspondante par une articulation qui coïncide avec l'axe de rotation de la porte à laquelle le déflecteur 70 est relié. Il est ainsi possible d'articuler ces différents éléments au niveau de l'extrémité proximale des bielles par une unique articulation.

Ce qui a été décrit ci-dessus en référence aux figures 7 à 9 s'applique par analogie au déflecteur 70 de la figure 10.

Notamment, le déflecteur 70 est dans cet exemple configuré de manière à se replier au sein d'un logement 61 délimité circonférentiellement entre la porte supérieure 47 et la poutre 44 correspondante et, radialement, dans l'épaisseur de la porte supérieure 47. Lorsque cette dernière est en position fermée (figure 13), le logement 61 est délimité radialement à l'intérieur par une paroi interne 81 de la poutre 44 et radialement à l'extérieur par une paroi portant ladite surface externe 63 de la porte supérieure 47.

De même, chacune des ouvertures latérales de l'inverseur 40 en configuration d'inversion de poussée peut être obstruée par un déflecteur similaire à au déflecteur 70 de la figure 10.

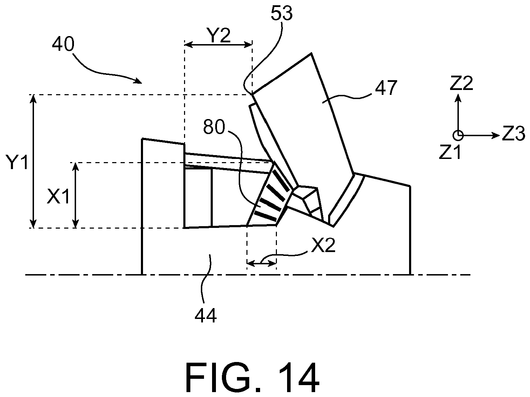

Il est représenté à la figure 14 un inverseur 40 du même type que celui de la figure 9, avec un déflecteur 80 conforme à l'invention. Le déflecteur 80 peut être similaire au déflecteur 60A de la figure 7, à l'un des déflecteurs 60 de la figure 9 ou au déflecteur 70 de la figure 10.

Dans cet exemple, le déflecteur 80 est relié à la porte supérieure 47 et à l'une des poutres 44 de la structure fixe.

Le déflecteur 80 déplié, c'est-à-dire lorsque la porte supérieure 47 est en position ouverte, présente dans cet exemple une dimension d'envergure tangentielle X1 correspondant sensiblement à la moitié de la distance radiale Y1 entre la poutre 44 et l'extrémité distale 53 de la porte supérieure 47 ouverte, la distance Y1 étant dans cet exemple mesurée au niveau de l'extrémité latérale de la porte 47. De bonnes performances d'obstruction peuvent être obtenues avec une dimension X1 supérieure ou égale à 25% de la dimension Y1.

Dans cet exemple, le déflecteur 80 déplié présente en outre une dimension d'envergure axiale X2 correspondant sensiblement à la moitié de la distance axiale Y2 entre une extrémité avant de l'ouverture d'inversion et ladite extrémité distale 53 de la porte 47 ouverte, la distance Y2 étant également mesurée au niveau de l'extrémité latérale de la porte 47. De bonnes performances d'obstruction peuvent être obtenues avec une dimension X2 supérieure ou égale à 30% de la dimension Y2.

Chacun des déflecteurs 60, 60A-60D et 70 décrits ci-dessus peut présenter des dimensions d'envergure du même ordre.

Dans un mode de réalisation non représenté, dans lequel l'inverseur 40 équipe un ensemble propulsif 20 monté sur le fuselage 2 d'un aéronef tel l'avion 1 de la figure 1, l'inverseur 40 comprend un unique déflecteur tel que décrit ci-dessus, par exemple le déflecteur 60A de la figure 7, l'un des déflecteurs 60 de la figure 9 ou le déflecteur 70 de la figure 10. Cet unique déflecteur est relié à la structure fixe 41 et à la porte supérieure 47 de manière à être situé du même côté que le fuselage 2 par rapport au plan vertical P1 et du même côté que l'empennage 5 de cet aéronef 1 par rapport au plan horizontal P2.

L'invention n'est aucunement limitée à des inverseurs du type décrit ci-dessus. Par exemple, l'invention s'applique de manière analogue à un inverseur tel celui décrit dans le document FR 2 764 000 A1.

L'invention s'applique aussi à des inverseurs comprenant plus de deux portes, par exemple à des inverseurs destinés à inverser uniquement le flux secondaire d'un ensemble propulsif.

Plus généralement, le principe de l'invention peut être mis en oeuvre dans toute application nécessitant d'améliorer le contrôle des jets d'air sortant de l'inverseur en inversion de poussée. Par exemple, l'invention présente aussi un intérêt dans des applications dans lesquelles l'inverseur équipe un ensemble propulsif monté sous une aile d'un aéronef.

## Revendications

1. Inverseur de poussée (40) pour ensemble propulsif (20) d'aéronef (1), cet inverseur (40) comprenant une structure fixe (41) et au moins une porte (47) mobile entre :
- une position fermée dans laquelle elle délimite avec la structure fixe (41) un conduit d'écoulement (D1), le conduit d'écoulement (D1) comprenant une sortie d'éjection délimitée au moins en partie par une extrémité arrière (43) de la structure fixe (41), la porte (47) en position fermée étant configurée pour pouvoir guider un fluide (E1) en écoulement dans le conduit (D1) vers sa sortie d'éjection afin de générer une poussée, et
- une position ouverte dans laquelle la porte (47) dégage une ouverture d'inversion de manière à pouvoir évacuer du conduit d'écoulement (D1) une partie (E3) dudit fluide, via cette ouverture d'inversion, et rediriger au moins une partie (E4) du fluide ainsi évacué vers une extrémité avant (42) de la structure fixe (41) afin de générer une contre-poussée,
cet inverseur (40) étant **caractérisé en ce qu'**il comprend au moins un déflecteur (60A-60D, 60, 70, 80) relié à la fois à la porte (47) et à la structure fixe (41) de manière à se plier lorsque la porte (47) est fermée et à se déplier lorsque la porte (47) est ouverte, le déflecteur (60A-60D, 60, 70, 80) déplié obstruant une ouverture latérale définie entre la structure fixe (41) et une extrémité latérale (54) de la porte (47) ouverte.

2. Inverseur (40) selon la revendication 1, dans lequel le déflecteur (70) comprend des lames mobiles (71A-71E) d'obstruction et une ou plusieurs bielles (72A-72D), chaque bielle (72A-72D) étant articulée à l'une de ses extrémités sur une première lame mobile adjacente parmi lesdites lames mobiles (71A-71E) et à l'autre de ses extrémités sur une deuxième lame mobile adjacente parmi lesdites lames mobiles (71A-71E).

3. Inverseur (40) selon la revendication 1 ou 2, dans lequel le déflecteur (60A-60D, 60, 80) comprend au moins une paroi en matériau souple permettant son pliage lorsque la porte (47) est fermée et son dépliage lorsque la porte (47) est ouverte.

4. Inverseur (40) selon la revendication 3, dans lequel le matériau souple est un textile tel qu'un tissu.

5. Inverseur (40) selon l'une quelconque des revendications 1 à 4, dans lequel la structure fixe (41) comprend des poutres (44) délimitant radialement l'ouverture d'inversion, le déflecteur (60A-60D, 60, 70, 80) étant relié à l'une de ces poutres (44).

6. Inverseur (40) selon l'une quelconque des revendications 1 à 5, dans lequel le déflecteur (60A-60D, 60, 70, 80) est configuré de manière à occuper, lorsque la porte (47) est fermée, un logement (61) délimité circonférentiellement entre la porte (47) et la structure fixe (41) et ayant une dimension radiale inférieure ou égale à une épaisseur de la porte (47).

7. Nacelle (22) pour ensemble propulsif (20) d'aéronef (1), cette nacelle (22) comprenant un inverseur (40) selon l'une quelconque des revendications 1 à 6.

8. Ensemble propulsif (20) pour aéronef (1), cet ensemble propulsif (20) comprenant une nacelle (22) selon la revendication 7.

9. Aéronef (1) comprenant un ensemble propulsif (20) selon la revendication 8, cet aéronef (1) comprenant un fuselage (2) sur lequel est monté l'ensemble propulsif (20), le fuselage (2) de l'aéronef (1) et l'au moins un déflecteur (60A-60D, 60, 70, 80) de l'inverseur (40) étant situés du même côté d'un premier plan longitudinal médian (P1) de l'inverseur (40).

10. Aéronef (1) selon la revendication 9, cet aéronef (1) comprenant un empennage (5), cet empennage (5) et ladite porte (47) de l'inverseur (40) étant situés d'un même côté d'un deuxième plan longitudinal médian (P2) de l'inverseur (40), ce deuxième plan longitudinal médian (P2) étant perpendiculaire audit premier plan longitudinal médian (P1).

## Patentansprüche

1. Schubumkehrvorrichtung (40) für eine Antriebseinheit (20) eines Flugzeugs (1), wobei die Schubumkehrvorrichtung (40) eine feste Struktur (41) und mindestens eine Klappe (47) umfasst, die zwischen Folgendem beweglich ist:
- einer geschlossenen Position, in der sie mit der festen Struktur (41) einen Strömungskanal (D1) begrenzt, wobei der Strömungskanal (D1) einen Ausstoßauslass umfasst, der mindestens teilweise von einem hinteren Ende (43) der festen Struktur (41) begrenzt wird, wobei die Klappe (47) in der geschlossenen Position dazu konfiguriert ist, ein im Kanal (D1) strömendes Fluid (E1) in Richtung dessen Ausstoßauslasses zu leiten, um einen Schub zu erzeugen, und
- einer offenen Position, in der die Klappe (47) eine Umkehröffnung freigibt, um einen Teil (E3) des Fluids aus dem Strömungskanal (D1) über die Umkehröffnung ableiten zu können und mindestens einen Teil (E4) des so abgeleiteten Fluids in Richtung eines vorderen Endes (42) der festen Struktur (41) umzuleiten, um einen Gegenschub zu erzeugen,
wobei die Umkehrvorrichtung (40) **dadurch gekennzeichnet ist, dass** sie mindestens eine Ablenkplatte (60A-60D, 60, 70, 80) umfasst, die sowohl mit der Klappe (47) als auch mit der festen Struktur (41) verbunden ist, so dass sie zusammengeklappt ist, wenn die Klappe (47) geschlossen ist, und aufgeklappt ist, wenn die Klappe (47) geöffnet ist, wobei die aufgeklappte Ablenkplatte (60A-60D, 60, 70, 80) eine seitliche Öffnung verschließt, die zwischen der festen Struktur (41) und einem seitlichen Ende (54) der offenen Klappe (47) definiert ist.

2. Umkehrvorrichtung (40) nach Anspruch 1, wobei die Ablenkplatte (70) bewegliche Verschlusslamellen (71A-71E) und eine oder mehrere Verbindungsstangen (72A-72D) umfasst, wobei jede Verbindungsstange (72A-72D) an einem ihrer Enden an einer ersten benachbarten beweglichen Lamelle der beweglichen Lamellen (71A-71E) und am anderen ihrer Enden an einer zweiten benachbarten beweglichen Lamelle der beweglichen Lamellen (71A-71E) angelenkt ist.

3. Umkehrvorrichtung (40) nach Anspruch 1 oder 2, wobei die Ablenkplatte (60A-60D, 60, 80) mindestens eine Wand aus flexiblem Material umfasst, die es ermöglicht, sie zusammenzuklappen, wenn die Klappe (47) geschlossen ist, und sie aufzuklappen, wenn die Klappe (47) geöffnet ist.

4. Umkehrvorrichtung (40) nach Anspruch 3, wobei das flexible Material ein Textil, beispielsweise ein Gewebe, ist.

5. Umkehrvorrichtung (40) nach einem der Ansprüche 1 bis 4, wobei die feste Struktur (41) Träger (44) umfasst, die die Umkehröffnung radial begrenzen, wobei die Ablenkplatte (60A-60D, 60, 70, 80) mit einem der Träger (44) verbunden ist.

6. Umkehrvorrichtung (40) nach einem der Ansprüche 1 bis 5, wobei die Ablenkplatte (60A-60D, 60, 70, 80) dazu konfiguriert ist, wenn die Klappe (47) geschlossen ist, ein Gehäuse (61) einzunehmen, das in Umfangsrichtung zwischen der Klappe (47) und der festen Struktur (41) begrenzt ist und eine radiale Abmessung aufweist, die kleiner oder gleich einer Dicke der Klappe (47) ist.

7. Gondel (22) für eine Antriebseinheit (20) eines Flugzeugs (1), wobei die Gondel (22) eine Umkehrvorrichtung (40) nach einem der Ansprüche 1 bis 6 umfasst.

8. Antriebseinheit (20) für ein Flugzeug (1), wobei die Antriebseinheit (20) eine Gondel (22) nach Anspruch 7 umfasst.

9. Flugzeug (1), das eine Antriebseinheit (20) nach Anspruch 8, wobei das Flugzeug (1) einen Rumpf (2) umfasst, an dem die Antriebseinheit (20) montiert ist, wobei sich der Rumpf (2) des Flugzeugs (1) und die mindestens eine Ablenkplatte (60A-60D, 60, 70, 80) der Umkehrvorrichtung (40) auf derselben Seite einer ersten Längsmittelebene (P1) der Umkehrvorrichtung (40) befinden.

10. Flugzeug (1) nach Anspruch 9, wobei das Flugzeug (1) ein Leitwerk (5) umfasst, wobei sich das Leitwerk (5) und die Klappe (47) der Umkehrvorrichtung (40) auf derselben Seite einer zweiten Längsmittelebene (P2) der Umkehrvorrichtung (40) befinden, wobei die zweite Längsmittelebene (P2) senkrecht zur ersten Längsmittelebene (P1) verläuft.

## Claims

1. A thrust reverser (40) for a propulsion unit (20) of an aircraft (1), this thrust reverser (40) comprising a fixed structure (41) and at least one door (47) which is movable between:
- a closed position in which it delimits, with the fixed structure (41), a flow conduit (D1), the flow conduit (D1) comprising an ejection outlet which is at least partially delimited by a rear end (43) of the fixed structure (41), the door (47) in the closed position being configured to be able to guide a fluid (E1), which is flowing in the conduit (D1), towards the ejection outlet thereof in order to generate a thrust, and
- an open position in which the door (47) releases a reversal opening so as to be able to discharge, from the flow conduit (D1), a portion (E3) of said fluid, via this reversal opening, and to redirect at least one portion (E4) of the fluid thus discharged towards a front end (42) of the fixed structure (41) in order to generate a counter-thrust,
this thrust reverser (40) being **characterised in that** it comprises at least one deflector (60A-60D, 60, 70, 80) which is connected both to the door (47) and to the fixed structure (41) so as to be folded when the door (47) is closed and to be unfolded when the door (47) is open, the unfolded deflector (60A-60D, 60, 70, 80) obstructing a lateral opening defined between the fixed structure (41) and a lateral end (54) of the open door (47).

2. The thrust reverser (40) according to claim 1, wherein the deflector (70) comprises movable obstruction blades (71A-71E) and one or more connecting rods (72A-72D), each connecting rod (72A-72D) being hinged, at one of the ends thereof, on a first adjacent movable blade from said movable blades (71A-71E) and, at the other of the ends thereof, on a second adjacent movable blade from said movable blades (71A-71E).

3. The thrust reverser (40) according to claim 1 or 2, wherein the deflector (60A-60D, 60, 80) comprises at least one wall made of flexible material allowing it to be folded when the door (47) is closed and to be unfolded when the door (47) is open.

4. The thrust reverser (40) according to claim 3, wherein the flexible material is a textile such as a fabric.

5. The thrust reverser (40) according to any one of claims 1 to 4, wherein the fixed structure (41) comprises beams (44) radially delimiting the reversal opening, the deflector (60A-60D, 60, 70, 80) being connected to one of these beams (44).

6. The thrust reverser (40) according to any one of claims 1 to 5, wherein the deflector (60A-60D, 60, 70, 80) is configured so as to occupy, when the door (47) is closed, a housing (61) delimited circumferentially between the door (47) and the fixed structure (41) and having a radial dimension which is less than or equal to a thickness of the door (47).

7. A nacelle (22) for a propulsion unit (20) of an aircraft (1), this nacelle (22) comprising a thrust reverser (40) according to any one of claims 1 to 6.

8. A propulsion unit (20) for an aircraft (1), this propulsion unit (20) comprising a nacelle (22) according to claim 7.

9. An aircraft (1) comprising a propulsion unit (20) according to claim 8, this aircraft (1) comprising a fuselage (2) on which the propulsion unit (20) is mounted, the fuselage (2) of the aircraft (1) and the at least one deflector (60A-60D, 60, 70, 80) of the thrust reverser (40) being located on the same side of a first median longitudinal plane (P1) of the thrust reverser (40).

10. The aircraft (1) according to claim 9, this aircraft (1) comprising an empennage (5), this empennage (5) and said door (47) of the thrust reverser (40) being located on the same side of a second median longitudinal plane (P2) of the thrust reverser (40), this second median longitudinal plane (P2) being perpendicular to said first median longitudinal plane (P1).
